# EUROPEAN PATENT APPLICATION

(11) **EP 0 920 230 A1**
(43) Date of publication of application: **02.06.1999**
(21) Application number: 98122800.0
(22) Date of filing: 01.12.1998
(51) Int. Cl.: H04Q 7/38

(54) **Hand-off switching system for mobile communications**

(30) Priority: 01.12.1997 JP 330642/97
(71) Applicant: NEC CORPORATION, Tokyo (JP)
(72) Inventor: Endo, Hiroya, NEC Corporation, Tokyo (JP)
(74) Representative: Glawe, Delfs, Moll & Partner

(57) **Abstract**

A mobile communication system includes a plurality of mobile radio terminals (104), a plurality of radio base stations (102,103), and a radio base station controller (101). Each of the mobile radio terminals selects a soft hand-off process or a hard hand-off process depending on the type of a service, and indicates the selected hand-off process to the radio base station controller when requesting a call connection. The radio base station controller executes the indicated hand-off process.

## Description

### BACKGROUND OF THE INVENTION

### 1. Field of the Invention:

The present invention relates to a hand-off switching System for mobile communications for enabling a mobile radio terminal to switch between base stations by automatically selecting a hand-off mode depending on the type of a service which is being carried out in communications.

### 2. Description of the Related Art:

There has heretofore been known a CDMA (Code Division Multiple Access) mobile communication System which employs a soft hand-off System for enabling a mobile radio terminal to communicate simultaneously with a plurality of radio base stations using the same radio frequency, performing combined diversity reception and selective diversity reception between the mobile radio terminal, the radio base stations, and a radio base Station controller, and switching to a base Station to communicate with based on how the status of diversity reception changes. Such a soft hand-off System is disclosed in "AN OVERVIEW OF THE APPLICATION OF CODE DIVISION MULTIPLEX ACCESS (CDMA) TO DIGITAL CELLULAR SYSTEM AND PERSONAL CELLULAR NETWORKS, May 21, 1992".

There has also been known a hard hand-off system for switching between frequencies (or channels) for use between a radio base station and a mobile radio terminal to switch to a base station to communicate with, if the same frequency is not available in the base station to which the mobile radio terminal has switched to, or the circuit quality at the same frequency is extremely poor. Such a hard hand-off system is disclosed in Japanese laid-open patent publication No. 7-30482.

The above soft hand-off System is employed unless the frequency used between the mobile radio terminal and the radio base stations cannot be used in the radio base station to which the mobile radio terminal has switched to. However, the soft hand-off system is disadvantageous for the following reasons: The radio base station controller has to transmit and receive a signal of the mobile radio terminal to and from the radio base stations. Therefore, if soft hand-off occurs in many mobile radio terminals, then the radio base station controller suffers congestion or otherwise needs to handle an increased amount of traffic.

### SUMMARY OF THE INVENTION

It is therefore an object of the present invention to provide a hand-off switching System for mobile communications for preventing an excessive increase in the amount of traffic when switching to a radio base station.

To achieve the above object, there is provided a mobile communication system having a plurality of mobile radio terminals, a plurality of radio base stations, and a radio base Station controller, characterized in that each of the mobile radio terminals has selecting means for selecting a hand-off process depending on the type of a Service and indicating means for indicating a hand-off process selected by the selecting means to the radio base Station controller, the radio base Station controller having Storage means for storing the hand-off process indicated from the mobile radio terminals and switching means for executing the hand-off process stored by the storage means when a call connection is requested by the mobile radio terminals.

The radio base station controller has traffic status decision means for deciding whether the amount of traffic between the radio base station controller and a plurality of radio base stations controlled thereby is of an excessive traffic status or not. A hard hand-off process, rather than a soft hand-off process, is executed with respect to a mobile radio terminal for which the amount of traffic is determined as being of the excessive traffic status by the traffic status decision means and which has selected the hard hand-off process.

Alternatively, the radio base Station controller has movement speed indicating means for indicating a speed at which a mobile radio terminal which is communicating moves to the radio base Station controller. The radio base station controller executes a hard hand-off process, rather than a soft hand-off process, with respect to a mobile radio terminal for which the speed indicated by the movement speed indicating means represents a normal movement communication mode and which selected the hard hand-off process.

Further alternatively, each of the mobile radio terminals has designating means for designating a hand-off process depending on the operation of keys by the user of the mobile radio terminal. The hand-off process designated by the designating means is executed.

With the above arrangement, if the type of the Service requested for a call connection request represents a service which allows a certain instantaneous interruption upon base station switching, e.g., a service of speech communications, then the mobile radio terminal determines a hard hand-off process, and if the type of the service requested for a call connection request represents a service which does not allow a certain instantaneous interruption upon base station switching, then the mobile radio terminal determines a soft hand-off process. The determined hand-off process is indicated to the radio base station controller for base station switching. Accordingly, the proportion of mobile radio terminals which execute the hard hand-off process is increased in the overall communication system, for thereby reducing the amount of traffic in circuits between the radio base station controller and the radio base stations.

Consequently, the amount of traffic is prevented from excessively increasing upon switching between base stations.

The above and other objects, features and advantages of the present invention will become apparent from the following description with reference to the accompanying drawings which illustrate examples of the present invention.

### BRIEF DESCRIPTION OF THE DRAWINGS

Fig. 1 is a block diagram of a mobile communication system according to a first embodiment of the present invention;
Fig. 2 is a block diagram of a radio base station controller of the mobile communication system shown in Fig. 1;
Fig. 3 is a diagram showing a selection sequence of a hand-off switching process carried out by the mobile communication system shown in Fig. 1;
Fig. 4 is a diagram showing a selection sequence of a hand-off switching process according to a second embodiment of the present invention;
Fig. 5 is a diagram showing a selection sequence of a hand-off switching process according to a third embodiment of the present invention; and
Fig. 6 is a diagram showing a selection sequence of a hand-off switching process according to a fourth embodiment of the present invention.

### DESCRIPTION OF THE PREFERRED EMBODIMENTS

The principles of the present invention are applicable to mobile communication Systems including known portable telephone, known PHS (Personal Handyphone System), and Systems using various digital radio communication terminals such as PDA (Personal Digital Assistant) or the like.

### 1st Embodiment:

### (1) Overall System arrangement:

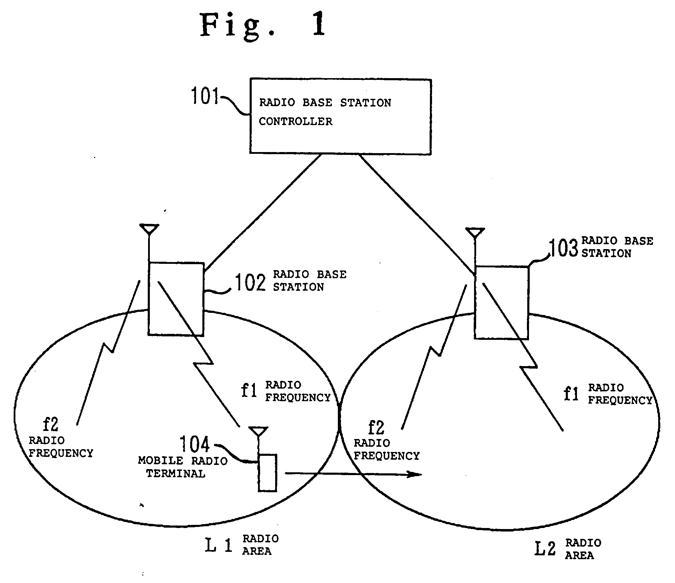

Fig. 1 shows in block form a mobile communication system according to a first embodiment of the present invention. As shown in Fig. 1, the mobile communication System comprises a radio base Station controller 101, a plurality of radio base stations 102, 103 controlled by the radio base Station controller 101, and a plurality of mobile radio terminals 104 for communicating with the radio base stations 102, 103.

The radio base Station controller 101 controls communications between the radio base stations 102, 103 and the mobile radio terminals 104. The radio base stations 102, 103 communicate with the mobile radio terminals 104 positioned in radio areas L1, L2 thereof, at frequencies f1, f2. Each of the mobile radio terminals 104 can move from the radio area L1 to the radio area L2 while communicating with the radio base Station 102 at the frequency f1 in the radio area L1.

### (2) Radio base Station controller 101:

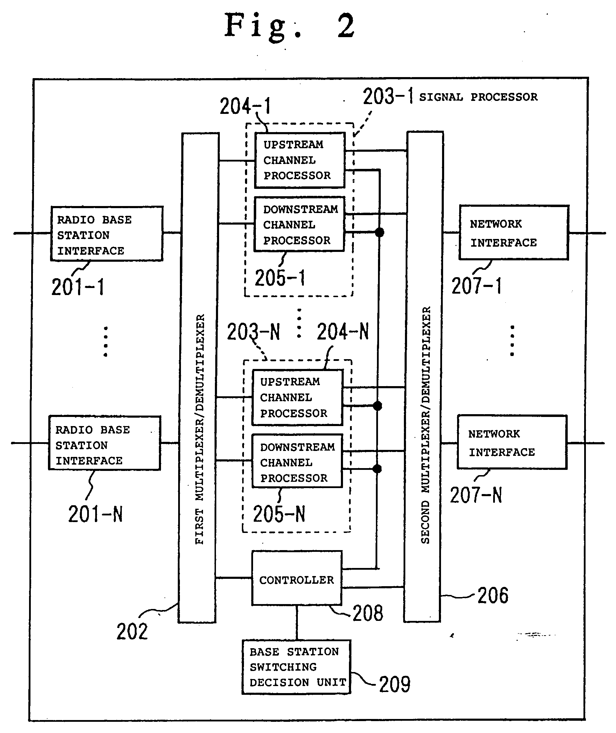

The radio base Station controller 101 according to the first embodiment will be described below with reference to Fig. 2. The radio base Station controller 101 can be connected to N radio base stations. The radio base Station controller 101 comprises a plurality of radio base station interfaces 201-1 - 201-N for transmitting signals to and receiving signals from corresponding radio base stations, a first multiplexer/demultiplexer 202 for multiplexing and demultiplexing signals transmitted from and received by the radio base Station interfaces 201-1 - 201-N, a plurality of Signal processors 203-1 - 203-N connected to the first multiplexer/demultiplexer 202 and associated respectively with mobile radio terminals which communicate via the radio base stations, a second multiplexer/demultiplexer 206 for multiplexing and demultiplexing signals according to the type of the interface with an ISDN switching exchange, a plurality of network interfaces 207-1 - 207-N connected to output terminals of the second multiplexer/demultiplexer 206, a controller 208 for controlling the radio base station controller 101, the radio base stations 102, 103 connected thereto, and the mobile radio terminals 101, and a base station switching decision unit 209 for determining a base station switching process for carrying out hand-off.

The signal processors 203-1 - 203-N have respective upstream channel processors 204-1 - 204-N for processing signals in upstream radio channels and respective downstream channel processors 205-1 - 205-N for processing signals in downstream radio channels.

### (3) Operation:

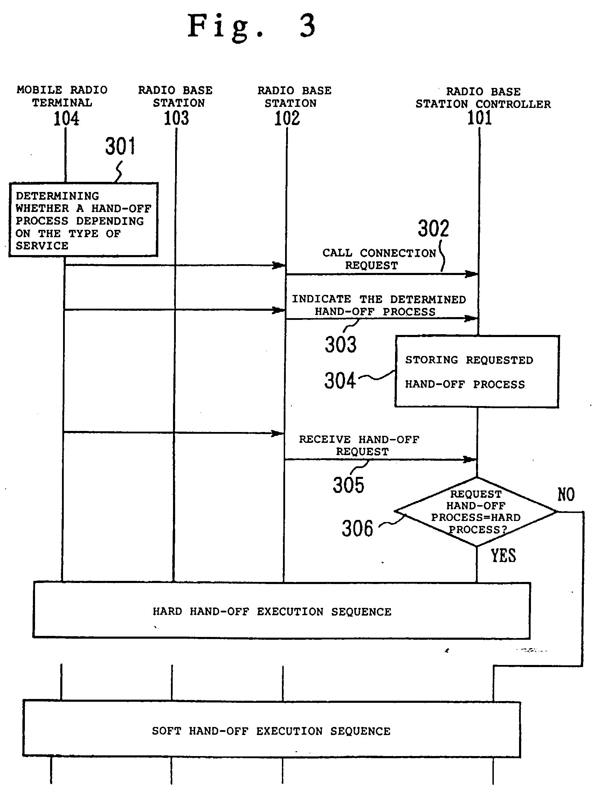

A base station switching process for carrying out hand-off, which is performed by the radio base station controller 101, will be described below with reference to Figs. 1 through 3. Fig. 3 shows a selection sequence of a hand-off switching process carried out by the mobile communication system shown in Fig. 1.

Before one of the mobile radio terminals 104 issues a call connection request (302) via the radio base station 102 to the radio base station controller 101, the mobile radio terminal 104 determines whether a hand-off process automatically requested depending on the type of a service for the call connection request is "soft hand-off"' or "hard hand-off" (301). The mobile radio terminal 104 sends the call connection request (302) and indicates the determined hand-off process (303).

If the type of the service requested for the call connection request (302) represents a service which allows a certain instantaneous interruption upon base station switching, e.g., a Service of speech communications, then the mobile radio terminal 104 determines a hard hand-off process. If the type of the service requested for the call connection request (302) represents a service which does not allow a certain instantaneous interruption upon base station switching, then the mobile radio terminal 104 determines a soft hand-off process. The mobile radio terminal 104 indicates the determined hand-off process to the radio base station controller 101.

The radio base station controller 101 receives the requested hand-off process (303) from the mobile radio terminal 104 via the radio base station 102, and indicates the requested hand-off process to the controller 208 via the corresponding radio base station interface 201 and the corresponding upstream channel processor 204. When the controller 208 receives the call connection request (302) from the mobile radio terminal 104, the controller 208 indicates the requested hand-off process (303) to the base station switching decision unit 209, which stores the requested hand-off process (304).

When the radio base station controller 101 receives a hand-off request (305) from the mobile radio terminal 104, the controller 208 asks the base station switching decision unit 209 about the hand-off process of the mobile radio terminal 104. Then, the base station switching decision unit 209 indicates the requested hand-off process (303), which has been indicated from the mobile radio terminal 104, to the controller 208. If the requested hand-off process (303) indicated by the base station switching decision unit 209 is a soft hand-off process, then the controller 208 executes a control process for carrying out the soft hand-off process between the mobile radio terminal 104 and the radio base stations 102, 103.

If the requested hand-off process (303) indicated by the base station switching decision unit 209 is a hard hand-off process, then the controller 208 executes a control process £or carrying out the hard hand-off process to change the station with which the mobile radio terminal 104 communicates from the radio base station 102 to the radio base station 103.

The above base station switching process is effective to reduce the overall number of radio base stations with which the mobile radio stations 104 communicate, for thereby reducing the amount of traffic within the radio base station controller 101 accordingly.

### 2nd Embodiment:

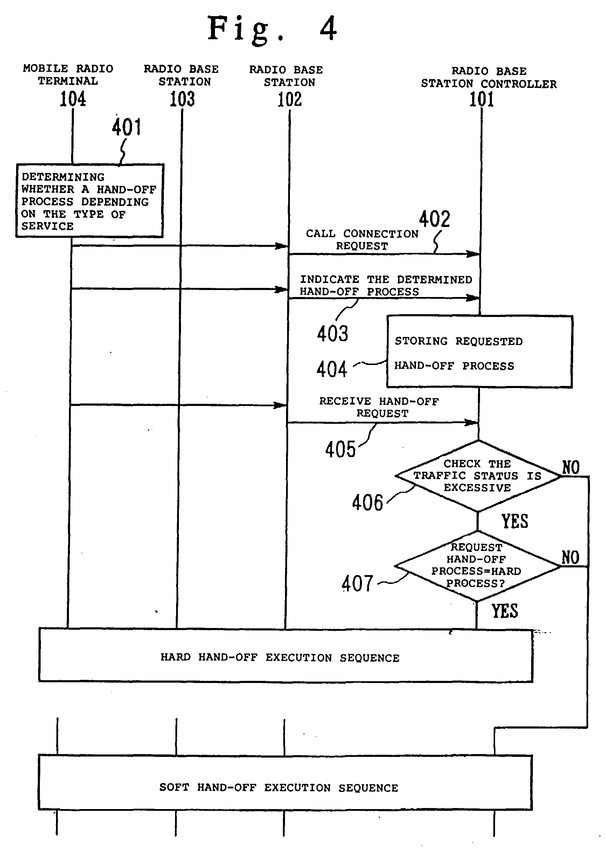

A base station switching process for carrying out hand-off according to a second embodiment will be described below with reference to Figs. 1, 2, and 4. The base station switching process according to the second embodiment is performed by the mobile communication system shown in Figs. 1 and 2. Fig. 4 shows a selection sequence of a hand-off switching process according to the second embodiment of the present invention.

In the radio base station controller 101, the first multiplexer/demultiplexer 202 measures the amount of traffic of each of the radio base Station interfaces 201-1 - 201-N connected thereto, determines an excessive traffic status if the measured amount of traffic exceeds a certain threshold, and indicates the excessive traffic status to the base station switching decision unit 209 via the controller 208.

The base Station switching decision unit 209 stores the indicated excessive traffic status. If the measured amount of traffic falls from the excessive traffic status to a level below the threshold, then the first multiplexer/demultiplexer 202 indicates a traffic recovery status to the base station switching decision unit 209 via the controller 208. In response to the indicated traffic recovery status, the base station switching decision unit 209 erases the stored excessive traffic status.

When the radio base station controller 101 receives a hand-off request (405) from the mobile radio terminal 104, the controller 208 asks the base station switching decision unit 209 about the hand-off process of the mobile radio terminal 104. Then, the base station switching decision unit 209 checks the requested hand-off process (403) and the traffic status of the radio base Station controller 101 (406 - 407).

If the requested hand-off process is a hard hand-off process and the traffic status is an excessive traffic status, then the controller 208 executes a control process for carrying out the hard hand-off process to change the station with which the mobile radio terminal 104 communicates from the radio base station 102 to the radio base station 103.

If the traffic status is not an excessive traffic status or the requested hand-off process is a soft hand-off process, then the controller 208 executes a control process for carrying out the soft hand-off process between the mobile radio terminal 104 and the radio base stations 102, 103. In this manner, the amount of traffic in the radio base station controller 101 can be reduced.

In the excessive traffic status, if the amount of traffic exceeds the processing capacity of the first multiplexer/demultiplexer 202, then such a condition may be indicated to the controller 208. Alternatively, the controller 208 automatically determine such a condition depending on the number of mobile radio terminals which are communicating with the radio base stations 102, 103 connected to the first multiplexer/demultiplexer 202 and the amount of communication data from those mobile radio terminals.

### 3rd Embodiment:

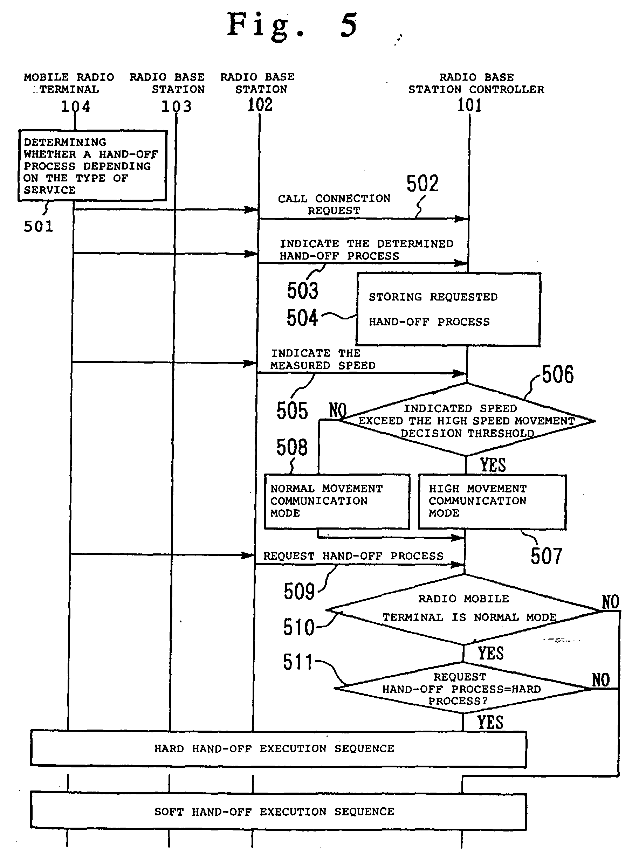

A base station switching process for carrying out hand-off according to a third embodiment will be described below with reference to Figs. 1, 2, and 5. The base station switching process according to the third embodiment is performed by the mobile communication system shown in Figs. 1 and 2. Fig. 5 shows a selection sequence of a hand-off switching process according to the third embodiment of the present invention.

In the radio base station controller 101, the controller 208 has a high-speed movement decision threshold established therein for determining a movement mode of the mobile radio terminals 104. The radio base station 102 measures the speed at which a mobile radio terminal 104 moves while it is communicating, and periodically indicates the measured speed to the radio base station controller 101 (505).

The radio base station controller 101 indicates the measured speed (505) to the controller 208. In order to determine a movement mode of the mobile radio terminal 104, the controller 208 compares the indicated speed and the established high-speed movement decision threshold. If the indicated speed exceeds the established high-speed movement decision threshold, then the controller 208 determines a high-speed movement communication mode, and if the indicated speed does not exceed the established high-speed movement decision threshold, then the controller 208 determines a normal movement communication mode (507 - 508). The controller 208 indicates the determined movement mode to the base station switching decision unit 209. The base station switching decision unit 209 stores the indicated movement mode and the requested hand-off process (503).

When the radio base station controller 101 receives a hand-off request (509) from the mobile radio terminal 104, the controller 208 asks the base station switching decision unit 209 about the hand-off process of the mobile radio terminal 104. Then, the base station switching decision unit 209 checks the requested hand-off process (509) and the movement mode of the mobile radio terminal 104 (501 - 511). If the requested hand-off process is a hard hand-off process and the movement mode is a normal movement communication mode, then the controller 208 executes a control process for carrying out the hard hand-off process to change the station with which the mobile radio terminal 104 communicates from the radio base station 102 to the radio base station 103.

If the movement mode is a high-speed movement communication mode or the requested hand-off process is a soft hand-off process, then the controller 208 executes a control process for carrying out the soft hand-off process between the mobile radio terminal 104 and the radio base stations 102, 103. In this manner, the amount of traffic in the radio base station controller 101 can be reduced.

### 4th Embodiment:

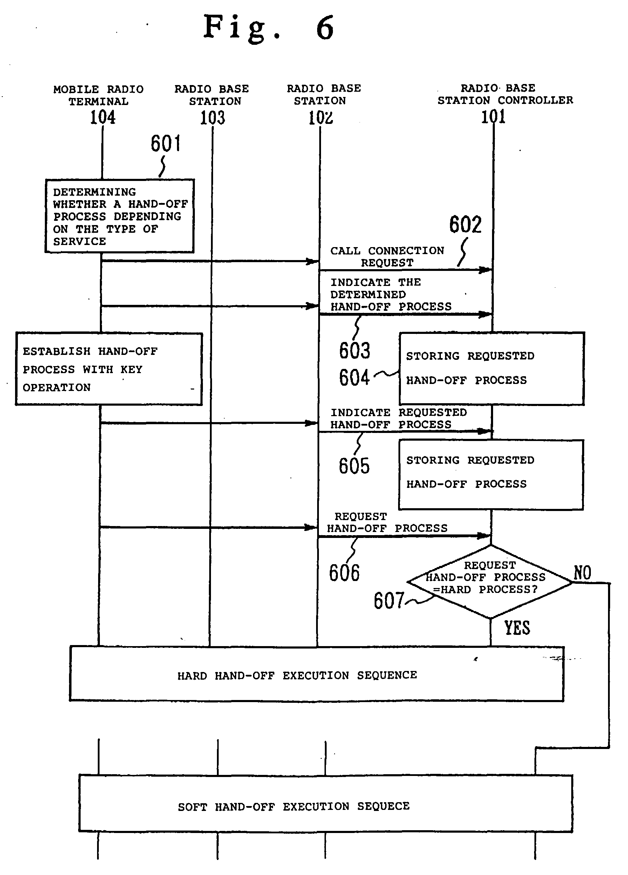

A base station switching process for carrying out hand-off according to a fourth embodiment will be described below with reference to Figs. 1, 2, and 6. The base station switching process according to the fourth embodiment is performed by the mobile communication system shown in Figs. 1 and 2. Fig. 6 shows a selection sequence of a hand-off switching process according to the fourth embodiment of the present invention.

When the user of a mobile radio terminal 104 establishes a hand-off process with keys, the mobile radio terminal 104 indicates the established hand-off process to the radio base station controller 101 (605).

The radio base station controller 101 indicates the established hand-off process to the base station switching decision unit 209. The base station switching decision unit 209 newly stores the indicated hand-off process, and thereafter, the controller 208 executes a control process using the subsequently indicated hand-off process (605) for switching between base stations.

The user may establish a hand-off process together with an incoming number with keys when making a call. Alternatively, the user may establish a hand-off process in an off-hook condition for answering a call. Thus, the user of the mobile radio terminal 104 can select a hand-off process arbitrarily.

According to the present invention, as described above, if the type of the service requested for a call connection request represents a Service which allows a certain instantaneous interruption upon base station switching, e.g., a service of speech communications, then the mobile radio terminal determines a hard hand-off process, and if the type of the service requested for a call connection request represents a service which does not allow a certain instantaneous interruption upon base station switching, then the mobile radio terminal determines a soft hand-off process. The determined hand-off process is indicated to the radio base station controller for base station switching. Accordingly, the proportion of mobile radio terminals which execute the hard hand-off process is increased in the overall communication system, for thereby reducing the amount of traffic in circuits between the radio base station controller and the radio base stations. Since internal resources of the radio base station controller are less used than when the soft hand-off process is established, the charge for calls may be lowered.

While preferred embodiments of the present invention have been described using specific terms, such description is for illustrative purposes only, and it is to be understood that changes and variations may be made without departing from the sprit or scope of the following claims.

## Claims

1. A mobile communication system having a plurality of mobile radio terminals, a plurality of radio base stations, and a radio base station controller, characterized in that:
each of said mobile radio terminals has selecting means for selecting a hand-off process depending on the type of a service and indicating means for indicating a hand-off process selected by said selecting means to said radio base station controller, and
said radio base station controller have storage means for storing the hand-off process indicated from said mobile radio terminals and switching means for executing the hand-off process stored by said storage means when a call connection is requested by said mobile radio terminals.

2. A mobile communication system according to claim 1, wherein said radio base station controller has traffic status decision means for deciding whether the amount of traffic between the radio base station controller and a plurality of radio base stations controlled thereby is of an excessive traffic status or not, and wherein a hard hand-off process, rather than a soft hand-off process, is executed with respect to a mobile radio terminal for which the amount of traffic is determined as being of the excessive traffic status by said traffic status decision means and which has selected the hard hand-off process.

3. A mobile communication system according to claim 1, wherein said radio base station controller has movement speed indicating means for indicating a speed at which a mobile radio terminal which is communicating moves to said radio base station controller, and wherein said radio base station controller executes a hard hand-off process, rather than a soft hand-off process, with respect to a mobile radio terminal for which the speed indicated by said movement speed indicating means represents a normal movement communication mode and which selected the hard hand-off process.

4. A mobile communication system according to claim 1, wherein each of said mobile radio terminals has designating means for designating a hand-off process depending on the operation of keys by the user of the mobile radio terminal, and wherein the hand-off process designated by said designating means is executed.
